Europäisches Patentamt

European Patent Office

Office européen des brevets

(19)

(11) Veröffentlichungsnummer : **0 085 343**
**B1**

(12) **EUROPÄISCHE PATENTSCHRIFT**

(45) Veröffentlichungstag der Patentschrift :
21.11.85

(21) Anmeldenummer : 83100374.4

(22) Anmeldetag : 18.01.83

(51) Int. Cl.⁴ : **C 01 B 25/237**

(54) **Verfahren zur Reinigung von Nassverfahrensphosphorsäure.**

(30) Priorität : 28.01.82 DE 3202659

(43) Veröffentlichungstag der Anmeldung :
10.08.83 Patentblatt 83/32

(45) Bekanntmachung des Hinweises auf die Patenterteilung : 21.11.85 Patentblatt 85/47

(84) Benannte Vertragsstaaten :
BE DE FR GB IT NL

(56) Entgegenhaltungen :
FR-A- 2 243 017
FR-A- 2 286 790
FR-A- 2 307 023

(73) Patentinhaber : HOECHST AKTIENGESELLSCHAFT
Postfach 80 03 20
D-6230 Frankfurt am Main 80 (DE)

(72) Erfinder : Gradl, Reinhard, Dr.
Am grünen Weg 6
D-5030 Hürth (DE)
Erfinder : Schimmel, Günther, Dr.
Ehrenstrasse 16
D-5042 Erftstadt (DE)
Erfinder : Wolter, Manfred, Dr.
Am grünen Weg 4
D-5030 Hürth (DE)
Erfinder : Heymer, Gero, Dr.
Fasanenaue 12
D-5042 Erftstadt (DE)

## Beschreibung

Die vorliegende Erfindung betrifft ein Verfahren zur Reinigung von roher, freie Schwefelsäure enthaltender Naßverfahrensphosphorsäure, insbesondere einer solchen mit einem $P_2O_5$-Gehalt von 45 bis 55 Gewichts %, durch Zugabe von einer zur Fällung der Schwefelsäure als Calciumsulfat ausreichenden Menge einer Calciumverbindung sowie von einem Adsorptionsmittel für Verunreinigungen organischer Art und Abtrennen der gereinigten Phosphorsäure von in der gebildeten Maische enthaltenen Feststoffen.

Beim Aufschluß von Phosphaterzen mit Mineralsäuren entstehen stark verunreinigte Rohphosphorsäuren, die im Falle der Verwendung von Schwefelsäure als Hauptverunreinigungskomponente bis zu 4 % Sulfat enthalten. Neben den anorganischen Verunreinigungen sind in der Rohsäure auch organische Verbindungen enthalten, die im Ausgangsmaterial (Rohphosphat) enthalten sind oder bei der Vorbehandlung des Ausgangsmaterials oder beim Rohphosphataufschluß zugesetzt wurden.

Diese Verunreinigungen müssen für die weitere Nachbehandlung der Rohsäure bzw. für die verschiedenen Verwendungszwecke der gereinigten Säure entfernt werden.

Die Eliminierung organischer Stoffe aus Phosphorsäure mit Hilfe von Aktivkohle als Adsorptionsmittel ist bereits bekannt.

Die meisten der bekannten Reinigungsverfahren (vgl. DE-B-12 65 725 und DE-C-15 67 699) sind aber praktisch nur anwendbar in Verbindung mit einem Rohphosphat-Aufschlußprozeß, bei dem Phosphorsäure mit einem $P_2O_5$-Gehalt bis zu etwa 30 Gew% entsteht. Handelsübliche Phosphorsäuren sind indessen 50 bis 54 gewichtsprozentig an $P_2O_5$. Deshalb beschreibt die DE-B-24 47 390 entspricht der FR-A-22 867 790) ein Verfahren zur Reinigung von roher, freie Schwefelsäure enthaltender Naßverfahrensphosphorsäure bei erhöhter Temperatur durch Zugabe von einer zur Fällung der Schwefelsäure als Calciumsulfat ausreichenden Menge einer dafür geeigneten Calciumverbindung und von Calciumsulfat-Impfkristallen in Gegenwart von Alkali-, Kieselsäure- und Sulfidverbindungen sowie von einem Adsorptionsmittel für Verunreinigungen organischer Art und Abtrennen der zugesetzten oder gebildeten Feststoffe. Dadurch wird es möglich, auch konzentrierte Naßphosphorsäuren einzusetzen, die einen Gehalt an $P_2O_5$ von 45 bis 55 Gew% aufweisen.

Auch bei diesem Verfahren wird als Adsorptionsmittel zur Entfernung der org. Verunreinigungen ausschließlich Aktivkohle verwendet. Dabei ist es zur Reinigung solcher Rohsäuren, die höhere Gehalte an organischen Verbindungen ($C_{org}$-Verbindungen) aufweisen, notwendig, hochwertige und damit teure Aktivkohlen in größeren Mengen zu verwenden.

Ferner ist von anderen Arbeitsgebieten her bekannt (vgl. DE-A 24 42 304 die der FR-A-22 43 017 entspricht, daß auch Ruß als Adsorptionsmittel dienen kann.

Versuche Ruß anstelle von Aktivkohle bei der Reinigung von Phosphorsäure einzusetzen führten jedoch zu erhöhten $P_2O_5$-Verlusten und zu einer schlechteren Filtrierbarkeit der bei der Reinigung entstehenden Maische (vgl. nachfolgende Beispiele 2 und 4).

Aufgabe der vorliegenden Erfindung war es, ein Verfahren bereitzustellen, daß es ermöglicht, anstelle von hochwertiger Aktivkohle zur Reinigung von Phosphorsäure Ruß einzusetzen, der oft als ein kostengünstiges Abfallprodukt bei verschiedenen, industriell genutzten Prozessen anfällt.

Überraschenderweise wurde gefunden, daß sich diese Aufgabe in einfacher Weise lösen läßt, wenn man bei der Durchführung des eingangs erwähnten Verfahrens als Adsorptionsmittel Ruß verwendet und man die rohe Phosphorsäure vor der Zugabe der Calciumverbindung mit einer Aluminiumverbindung versetzt, die in der Phosphorsäure unter Bildung von Aluminiumionen löslich ist. Andere Kationen, zweiwertige und auch dreiwertige, zeigten in Vergleichsversuchen keine Wirksamkeit. Vorzugsweise wird dabei die Aluminiumverbindung, berechnet als Aluminium, in einer Menge von 0,02 bis 0,1 Gew% bezogen auf $P_2O_5$, und der Ruß einer Menge von 0,1 bis 5,0 Gewichts %, bezogen auf $P_2O_5$, eingesetzt.

Kleinere Mengen zeigen keine Wirksamkeiten während größere zu einer Erhöhung der Ausbeuteverluste an $P_2O_5$ führen. Als Aluminiumverbindung bietet sich in erster Linie Aluminiumsulfat bzw. dessen Hydrat an, weil hierdurch keine weiteren fremden Anionen in die Rohsäure eingebracht werden.

Besonders hat sich ein Ruß bewährt der gemäß der DE-C-25 15 633 (entspricht der FR-A-23 07 023) erhalten wurde, indem man eine wäßrige Suspension von Ruß, die in an sich bekannter Weise durch thermische Umwandlung von bei Raumtemperatur flüssigen Kohlenwasserstoffen in Gegenwart von Sauerstoff oder sauerstoffhaltigen Gasen und ggf. Wasserdampf bei 1 200 bis 2 000 °C und Drucken von 0,98 bis 78,4 bar sowie anschließendes Waschen des rußhaltigen Reaktionsgases mit Wasser gewonnen wurde. Diese Suspension wird dann mit verdampfbaren aliphatischen oder cycloaliphatischen Kohlenwasserstoffen in einer Menge von 0,5 bis 10 g Kohlenwasserstoff je Gramm Ruß bei Temperaturen von 5-120 °C und Drucken von 0,98 bis 19,6 bar in flüssiger Phase während 1 bis 20 Minuten intensiv gemischt und anschließend der Ruß von der Flüssigkeit abgetrennt und durch Erhitzen von Kohlenwasserstoffen und Wasser befreit.

In der erwähnten DE-B-24 47 390 ist ein Verfahren zur Reinigung von roher, freie Schwefelsäure enthaltender Naßverfahrensphosphorsäure beschrieben. Nach dieser bekannten Arbeitsweise gibt man zunächst in einer Reaktionszone zu der Phosphorsäure bei Temperaturen zwischen 80 und 100 °C eine Calciumverbindung und Calciumsulfathalbhydrat als Impfkristalle in Gegenwart von Alkali-, Kieselsäure-

2

und Sulfidverbindungen sowie von Aktivkohle als Adsorptionsmittel. Dabei wird die Schwefelsäure als Calciumsulfathalbhydrat unter Bildung einer Maische gefällt. Ein Teil dieser Maische wird dann in die Reaktionszone zurückgeführt. Aus dem Rest der Maische trennt man die Feststoffe von der gereinigten Phosphorsäure ab und schlämmt sie zu einer wäßrigen Suspension auf, die 0 bis 30 Gewichts % Phosphorsäure enthält. Anschließend wird das in dieser Aufschlämmung enthaltene Calciumsulfathalbhydrat bei Temperaturen zwischen 20 und 70 °C in Calciumsulfathalbhydrat umgewandelt und die Feststoffe der Aufschlämmung von der waßrigen Phase abgetrennt. Die abgetrennten Feststoffe werden darauf mit Wasser ausgewaschen, ein Teil der abgetrennten wäßrigen Phase und des anfallenden Waschwassers zur Aufschlämmung der Feststoffe in den Prozeß zurückgeführt und der andere Teil wird mit der erhaltenen gereinigten Phosphorsäure vereinigt.

Es hat sich nun als sehr vorteilhaft erwiesen, in diesem bekannten Verfahren anstelle von Aktivkohle in der erfindungsgemäße Weise Ruß in Verbindung mit einer Aluminiumverbindung einzusetzen.

Das erfindungsgemäße Verfahren bietet den Vorteil, daß bei der Reinigung von konzentrierten Rohphosphorsäuren, insbesondere bei der Entfernung von org. Verunreinigungen, anstelle der bisher üblichen hochwertigen Aktivkohle als Adsorptionsmittel der kostengünstigere und spezifisch wirksamere und damit in geringerer Menge einzusetzende Ruß verwendet werden kann. Gleichzeitig kann durch den erfindungsgemäßen Zusatz einer Aluminiumverbindung die Filtrationszeit beim Abtrennen der gebildeten Feststoffe verkürzt und damit die Filterleistung in der Calciumsulfat-Halbhydrat-Filtration erhöht werden. Außerdem wird der $P_2O_5$-Gehalt im Calciumsulfatdihydrat-Kuchen, der aus der Umwandlung des in der Primärfiltration gebildeten Calciumsulfathalbhydrats entsteht, verringert und damit auch der Gesamt-$P_2O_5$-Verlust.

Die Wirkungsweise der Aluminiumverbindung ist nicht geklärt, sie ist für den Fachmann überraschend, da in handelsüblichen Rohsäuren bereits eine wesentlich größere als die erfindungsgemäß zugesetzte Menge an Aluminiumsalzen gelöst enthalten ist.

Die folgenden Beispiele sollen der näheren Erläuterung der Erfindung dienen :

Jeweils 750 ml konzentrierte Rohphosphorsäure mit einem $P_2O_5$-Gehalt von 50,2 Gew%, einem Sulfatgehalt von 2,5 Gew% und einem $C_{org}$-Gehalt von 520 ppm(*) wurden in einem Becherglas auf 80 °C erwärmt und unter Rühren mit dem Adsorptionsmittel und einer auf den Sulfatgehalt bezogenen Menge einer Calciumverbindung versetzt. Nach einstündigem Rühren und einer Mindesttemperatur von 80 °C wurde über ein Druckfilter heiß filtriert und die Filtrationszeit gemessen. In der abfiltrierten Rohsäure wurde der Restgehalt an $C_{org}$-Verbindungen bestimmt.

Der Filterkuchen wurde in 150 g einer an $P_2O_5$ 15 Gew%igen vorgereinigten Phosphorsäure eine Stunde bei 60 °C gerührt und das entstandene Calciumsulfatdihydrat wiederum auf einem Druckfilter abgetrennt. Der Filterkuchen wurde gewogen und das darin enthaltene $P_2O_5$ bestimmt.

Die Ergebnisse sind in der nachfolgenden Tabelle zusammengefaßt.

(*) ppm : Gewichtsteile pro Million.

(Siehe Tabelle Seite 4 f.)

| Bei-spiel | $Al_2(SO_4)_3 \cdot 18\,H_2O$ | $Ca(OH)_2$ | Adsorbens | Adsorbens-menge | Filtrat.-Zeit | $C_{org.}$-Gehalt im Filtrat | $P_2O_5$-Gehalt im Gipsku-chen Gew% | Gesamt-verlust an $P_2O_5$ Gew% |
|---|---|---|---|---|---|---|---|---|
| 1 | - | 25,5 g | Handels-übliche Aktivkohle in Pulver-form | 3,1 g | 36 min | 180 ppm | 12,2 | 1,7 |
| 2 | - | 25,5 g | Ruß spez. Ober-fläche 1000 $m^2/g$ | 3,1 g | 43 min | 160 ppm | 16,7 | 3,2 |
| 3 | 3,1 g | 25,5 g | Ruß spez. Ober-fläche 1000 $m^2/g$ | 2,5 g | 30 min | 160 ppm | 12,0 | 1,6 |
| 4 | - | 25,5 g | Ruß spez. Ober-fläche 1000 $m^2/g$ | 6,2 g | 48 min | 140 ppm | 22,3 | 5,6 |
| 5 | 3,1 g | 25,5 g | Ruß spez. Ober-fläche 1000 $m^2/g$ | 6,2 g | 33 min | 140 ppm | 14,5 | 3,2 |

## Patentansprüche

1. Verfahren zur Reinigung von roher, freie Schwefelsäure enthaltender Naßverfahrensphosphorsäure durch Zugabe von einer zur Fällung der Schwefelsäure als Calciumsulfat ausreichenden Menge einer dafür geeigneten Calciumverbindung sowie von einem Adsorptionsmittel für Verunreinigungen organischer Art und Abtrennen der gereinigten Phosphorsäure von den in der gebildeten Maische enthaltenen Feststoffen, dadurch gekennzeichnet, daß man als Adsorptionsmittel Ruß verwendet und man die rohe Phosphorsäure vor der Zugabe der Calciumverbindung mit einer Aluminiumverbindung versetzt, die in der Phosphorsäure unter Bildung von Aluminiumionen löslich ist.

2. Verfahren nach Anspruch 1, dadurch gekennzeichnet, daß man die Aluminiumverbindung, berechnet als Aluminium, in einer Menge von 0,02 bis 0,1 Gew%, bezogen auf $P_2O_5$, einsetzt.

3. Verfahren nach Anspruch 1 oder 2, dadurch gekennzeichnet, daß man den Ruß in einer Menge von 0,1 bis 5,0 Gewichts %, bezogen auf $P_2O_5$, einsetzt.

4. Verfahren nach einem der Ansprüche 1 bis 3, dadurch gekennzeichnet, daß man als Aluminiumverbindung Aluminiumsulfat einsetzt.

5. Verfahren nach einem der Ansprüche 1 bis 4, dadurch gekennzeichnet, daß ein Ruß eingesetzt wird, der erhalten wurde, indem man eine wäßrige Suspension von Ruß, die in an sich bekannter Weise durch thermische Umwandlung von bei Raumtemperatur flüssigen Kohlenwasserstoffen in Gegenwart von Sauerstoff oder sauerstoffhaltigen Gasen und ggf. Wasserdampf bei 1 200 bis 2 000 °C und Drucken von 0,98 bis 78,4 bar sowie anschließendes Waschen des rußhaltigen Reaktionsgases mit Wasser gewonnen wurde, mit verdampfbaren aliphatischen oder cycloaliphatischen Kohlenwasserstoffen in einer Menge von 0,5 bis 10 g Kohlenwasserstoff je Gramm Ruß bei Temperaturen von 5-120 °C und Drucken von 0,98 bis 19,6 bar in flüssiger Phase während 1 bis 20 Minuten intensiv mischt, und daß man den Ruß von der Flüssigkeit abtrennt und durch Erhitzen von Kohlenwasserstoffen und Wasser befreit.

## Claims

1. Process for purifying crude wet-process phosphoric acid containing free sulfuric acid by the addition of calcium sulfate in a quantity sufficient for precipitating the sulfuric acid in the form of calcium sulfate, and of an adsorbant for organic impurities, and separation of the purified phosphoric acid from solid matter contained in the suspension obtained, which comprises using carbon black as adsorbant and, prior to adding the calcium compound, admixing the crude phosphoric acid with an aluminium compound which is soluble in the phosphoric acid with formation of aluminum ions.

2. Process as claimed in claim 1, wherein the aluminum compound, calculated as aluminum, is used in a quantity of 0,02 to 0.1 weight %, based on $P_2O_5$.

3. Process as claimed in claim 1 or 2, wherein the carbon black is used in a quantity of 0.1 to 5.0 weight %, based on $P_2O_5$.

4. Process as claimed in any of claims 1 to 3, wherein aluminum sulfate is used as aluminum compound.

5. Process as claimed in any of claims 1 to 4, which comprises using a carbon black having been obtained by subjecting an aqueous suspension of carbon black produced in known manner by thermal conversion of hydrocarbons being liquid at room temperature in the presence of oxygen or an oxygen-containing gas and optionally steam at 1 200 to 2 000 °C under pressures of 0.98 to 78.4 bar and by subsequently water scrubbing reaction gas containing carbon black, to intimate mixing with vaporizable aliphatic or cycloaliphatic hydrocarbons in a quantity of 0.5 to 10 g hydrocarbon per gram carbon black, at temperatures of 5 to 120 °C under pressures of 0.98 to 19.6 bar and in liquid phase over a period of 1 to 20 minutes ; separating the carbon black from the liquid and freeing it from the hydrocarbons and water by heating.

## Revendications

1. Procédé de purification d'acide phosphorique brut préparé par voie humide, contenant de l'acide sulfurique libre par addition d'un composé de calcium en quantité suffisante pour précipiter l'acide sulfurique sous forme de sulfate de calcium ainsi que d'un adsorbant pour les impuretés de nature organique et séparation de l'acide phosphorique purifié des matières solides contenues dans la suspension formée, caractérisé en ce que l'on utilise comme adsorbant du noir de fumée et on ajoute à l'acide phosphorique brut, avant le composé de calcium, un composé d'aluminium qui est soluble dans l'acide phosphorique avec formation d'ions aluminium.

2. Procédé selon la revendication 1, caractérisé en ce que l'on utilise le composé d'aluminium, calculé en aluminium, en quantité de 0,02-0,1 % en poids, par rapport au $P_2O_5$.

3. Procédé selon la revendication 1 ou 2, caractérisé en ce que l'on utilise le noir de fumée en quantité de 0,1-5,0 % en poids, par rapport au $P_2O_5$.

4. Procédé selon l'une des revendications 1 à 3, caractérisé en ce que l'on utilise du sulfate d'aluminium comme composé d'aluminium.

5. Procédé selon l'une des revendications 1 à 4, caractérisé en ce que l'on utilise un noir de fumée que l'on a obtenu en soumettant une suspension aqueuse de noir de fumée obtenue de manière connue par conversion thermique d'hydrocarbures liquides à la température ambiante en présence d'oxygène ou de gaz qui en contiennent et, éventuellement, de vapeur d'eau à 1 200-2 000 °C et sous des pressions de 0,98-78,4 bars et ensuite lavage à l'eau du gaz réactionnel contenant du noir de fumée, à un mélange intime avec des hydrocarbures cycloaliphatiques ou aliphatiques vaporisables en une quantité de 0,5-10 g d'hydrocarbure par g de noir de fumée à des températures de 5-120 °C et sous des pressions de 0,98-19,6 bars en phase liquide pendant 1-20 min., puis séparation du noir de fumée du liquide et élimination des hydrocarbures et de l'eau par chauffage.